# EUROPÄISCHE PATENTSCHRIFT

(11) **EP 1 765 484 B1**
(45) Veröffentlichungstag und Bekanntmachung des Hinweises auf die Patenterteilung: **14.11.2012**
(21) Anmeldenummer: 05763109.5
(22) Anmeldetag: 13.07.2005
(51) Int. Cl.: B01D 45/16

(54) **PARTIKELABSCHEIDER**
PARTICLE SEPARATOR
SEPARATEUR DE PARTICULES

(30) Priorität: 15.07.2004 DE 102004034151
(43) Veröffentlichungstag der Anmeldung: 28.03.2007
(73) Patentinhaber: Eisenmann AG, 71032 Böblingen (DE)
(72) Erfinder: KATEFIDIS, Apostolos, 71116 Gärtringen (DE)
(74) Vertreter: Ostertag, Ulrich
(86) Internationale Anmeldenummer: PCT/EP2005/007614
(87) Internationale Veröffentlichungsnummer: WO 2006/008048

(56) Entgegenhaltungen:
- EP-A- 1 004 365
- GB-A- 539 188
- GB-A- 662 072
- GB-A- 2 183 502
- US-A- 4 640 201

## Beschreibung

Die Erfindung betrifft einen Partikelabscheider nach dem oberbegriff des Patentanspruchs 1.

Bei einer Zuluftanlage, wie sie beispielsweise in der Automobilindustrie oder der verhüttungsindustrie eingesetzt wird, muss Luft von Verunreinigungen in Form von Partikeln gesäubert werden. Die Verunreinigungen können je nach Anlagenstandort in unterschiedlicher Form auftreten. Beispielsweise müssen in der Verhüttungsindustrie Staubkörner mit einer Größe von mehr als 10 *µ*m, wie zum Beispiel Flugsand oder Stäube, aus der Luft gefiltert werden, die sich deutlich in Dichte und Größe von organischen Stäuben wie beispielsweise Pollen unterscheiden.

Um Zuluft zu reinigen sind derzeit folgende Methoden bekannt:

Bei einem zyklon wird die verunreinigte Luft in den Innenraum eines hohlen kegelförmigen Behältnissen durch einen Einströmkanal im Bereich der Grundfläche geleitet. Die verunreinigte Luft strömt entlang des Kegelmantels auf einer Spiralbahn bis zur Kegelspitze. Die Partikel werden durch die Zentrifugalkraft nach Außen an die Innenseite der Kegelmantelfläche getragen, durch die Reibung abgebremst und in einem Auffangbehälter an der Kegelspitze gesammelt. Der Luftstrom hingegen wird an der Kegelspitze umgelenkt und strömt entlang der Kegelachse von der Kegelspitze in Richtung der Grundfläche weg, in der eine Austrittsöffnung für gereinigte Luft vorgesehen ist. Die Abscheidung der Partikel erfolgt also aufgrund der Zentrifugalkraft. Um einen großen Abscheidegrad zu erreichen, müssen der Öffnungswinkel des Kegels, der Eintrittswinkel des Luft - Partikel - Gemischs und die Strömungsgeschwindigkeit optimal aneinander angepasst sein. Es wird also eine aufwändige Anordnung benötigt. Außerdem legt die verunreinigte Luft entlang der Spiralbahn einen langen Weg zurück, auf dem die Reibung am Kegelmantel Druckverluste bewirkt.

Bei einem Schwerkraft-Flugabscheider wird die zu reinigende Zuluft in einen durch zwei zusammenlaufende Luftleitbleche begrenzten Eingangskanal geleitet. Der Eingangskanal mündet in einen Austragkanal für die Partikel. In den Luftleitblechen sind Luftkanäle für die gereinigte Luft angeordnet, die im wesentlichen entgegen der Strömungerichtung des einströmenden Luft-Partikel-Gemischs aus dem Eingangskanal hinaus führen. Die Partikelabscheidung erfolgt hier dadurch, dass die Partikel durch die Schwerkraft in den Auslasskanal befördert werden, wobei der sich trichterförmig verengende Eingangskanal wie ein Falle für die Partikel wirkt, die so im Austragkanal festgehalten werden. Der Schwerkraft-Flugabscheider ist ohne großen technischen Aufwand realisierbar und betreibbar, jedoch ist der Abscheidegrad im Vergleich zum Zyklon klein.

Ein Partikelabscheider der eingangs genannten Art ist aus der GB 539 188 bekannt geworden. Die Verbindung des Eingangskanals mit dem Ausgangskanal für gereinigte Luft erfolgt dabei über speziell geformte Perforationen an der inneren Luftleitblech.

Ähnliches trifft auf einen in der US 4 640 201 beschriebenen Partikelabscheider für eine Wirbelschicht-Verbrennungsanlage zu.

Ein weiterer Partikelabscheider ähnlich dem der eingangs genannten Art ist der GB 2 183 502 A zu entnehmen. Hier ist eine starke Kompaktierung der Partikel, z. B. Tabak oder Papierschnitzel, unerwünscht.

Aufgabe der vorliegenden Erfindung ist es, einen Partikelabscheider der eingangs genannten Gattung zu realisieren, mit dem mit geringem technischem Aufwand ein mit Partikeln verunreinigter Fluidstrom, insbesondere ein Luftstrom, effizient gereinigt werden kann, wobei mit einem geringen Druckverlust ein großer Abscheidegrad erzielt werden soll. Darüber hinaus soll ein Verfahren angegeben werden, mit dem ein Partikelabscheider betrieben wird.

Diese Aufgabe wird erfindungsgemäß mit den im Patentanspruch 1 angegebenen Mitteln gelöst.

Erfindungsgemäß ist also vorgesehen, dass mehrere Eingangskanäle im Wesentlichen parallel angeordnet sind, wobei jedem dieser Eingangskanäle ein Austragkanal und ein Ablasakanal zugeordnet sind. So werden die Partikel in dem zusammenlaufenden Bereich des Eingangskanals in den Austragkanal befördert und dabei auf eine gekrümmte Bahn gezwungen, wo sie durch die Zentrifugalkraft an das äußere Fluidleitblech gepresst und abgebremst werden. Dadurch ist der große Abscheidegrad des Zyklons, der durch die Ausnutzung der Zentrifugalkraft erzielt wird, mit der einfachen Bauform des Schwerkraft - Flugabscheiders kombinierbar. Mittels der Mehrzahl von Eingangskanälen können auf einfache Weise große Luftmengen gereinigt werden.

Dadurch, dass mindestens ein Ablasskanal an der einen Seite durch das innere Luftleitblech eines ersten Eingangskanals und an der gegenüberliegenden Seite durch das äußere Luftleitblech eines zweiten Eingangskanals begrenzt ist, wird eine besonders Raum sparende Geometrie der Vorrichtung möglich.

Um Turbulenzen an den Fluidleitblechen zu vermeiden, ist bei einer vorteilhaften Ausführungsform der Auftreffwinkel des mit Partikeln verunreinigten Fluidstroms auf den gekrümmten Bereich des äußeren Fluidleitblechs kleiner als 20°, vorzugsweise 15°.

Um eine turbulenzarme Strömung im Inneren des Eingangskanals zu erreichen, ist vorteilhafterweise das innere Fluidleitblech vom Inneren des Eingangskanals weg gekrümmt, so dass eine kontinuierliche Verengung des Eingangskanals erreicht wird.

Besonders vorteilhaft ist, wenn die beiden Fluidleitbleche als Mantelsegmente von zwei hohlen Kreiszylindern realisiert sind, die unterschiedliche Achsen haben. Kreiszylindermäntel sind ohne großen technischen Aufwand herstellbar, denn sowohl die Krümmungsradien als auch die Längen des gekrümmte Bereichs sind einfach vorgebbar. Durch die Verschiebung der Achsen wird technisch einfach erreicht, dass die Fluidleitbleche zusammen laufen.

Bei einer weiteren vorteilhaften Ausführungsform haben die hohlen Kreiszylinder gleiche Radien, so dass die Herstellung der beiden Fluidleitbleche mit dem gleichen Werkzeug möglich ist.

Bei einer weiteren besonders vorteilhaften Ausführungsform, nimmt ein Maß der Krümmung des Bingangskanals zum Austragkanal hin zu. Hierdurch wird vorteilhafterweise erreicht, dass mit abnehmender Fluidgeschwindigkeit und daher kleiner werdender jeweiliger Zentrifugalkraft, die auf die einzelnen Partikel wirkt, zum Austragkanal hin der Krümmungsradius kleiner wird.

Besonders vorteilhaft ist, wenn der wenigstens eine Fluidkanal durch das Fluidleitblech des Eingangskanals hindurch führt, das gegenüber dem äußeren Fluidleitblech angeordnet ist. Hierdurch wird auf Öffnungen in dem äußeren Fluidleitblech verzichtet, an denen Turbulenzen hervorgerufen werden können.

Bei einer weiteren vorteilhaften Ausführungsform weist der wenigstens eine Fluidkanal im wesentlichen eine S-Form auf, so dass das gereinigte Fluid entlang dem Fluidleitblech turbulenzarm in den Außenbereich geleitet wird.

Zweckmäßigerweise führt der wenigstens eine Fluidkanal im Wesentlichen entgegen der ursprünglichen Fluidstromrichtung vom Eingangskanal weg, wodurch verhindert wird, dass Partikel durch den Fluidkanal hindurch entweichen können.

Vorteilhafterweise weist der Austragkanal eine Rückhalteeinheit für Partikel auf, mit der verhindert wird, dass die Partikel zurück in den Fluidstrom gelangen können.

Ein Ausführungsbeispiel der Erfindung wird nachfolgend anhand der Zeichnung näher erläutert; es zeigen
- Figur 1: schematisch einen Partikelabscheider mit zwei parallel geschalteten Eingangskanälen;
- Figur 2: eine Detailansicht eines in Figur 1 dargestellten Fluidkanals für das gereinigte Fluid;
- Figur 3: schematisch eine isometrische Ansicht des in Figur 1 dargestellten Partikelabscheiders.

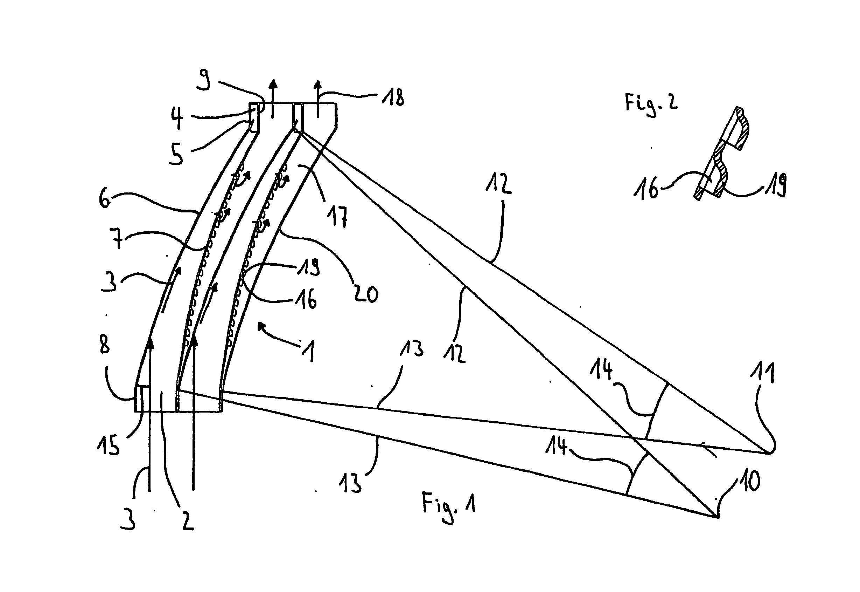

Der in Figur 1 dargestellte, insgesamt mit dem Bezugszeichen 1 versehene Partikelabscheider für eine nicht dargestellte Zuluftanlage weist zwei im Wesentlichen identische, zueinander parallel verlaufende Eingangskanäle 2 für einen mit Partikeln verunreinigten Luftstrom 3 auf.

Die Eingangskanäle 2 verengen sich in Richtung des einströmenden verunreinigten Luftstroms 3. Sie münden jeweils in einen Austragkanal 4 für die Partikel.

Darüber hinaus ist in den Austragkanälen 4 jeweils in einem Bereich der Mündung des jeweiligen Eingangskanals 2 je eine Rückhalteeinheit 5 für Partikel durch ebene Bleche realisiert, mit der ein Zurückströmen der Partikel in den jeweiligen Eingangskanal 2 verhindert wird.

Die Eingangskanäle 2 werden jeweils begrenzt durch Luftleitflächen, nämlich jeweils ein äußeres Luftleitblech 6 und ein inneres Luftleitblech 7. Die äußeren Luftleitbleche 6 sind jeweils zum Inneren der Eingangskanäle 2 hin gekrümmt, also von außen gesehen konvex, die inneren Luftleitbleche 7 sind jeweils vom Inneren der Eingangskanäle 2 weg gekrümmt, also von außen gesehen konkav.

Am jeweiligen in Figur 1 unten dargestellten Eingang der Eingangskanäle 2 sind jeweils beidseitig ebene Eingangsleitbleche 8 vorgesehen, die in die Luftleitbleche 6, 7 übergehen. An den in Figur 1 oberen Enden der Eingangskanäle 2 gehen die gekrümmten Luftleitbleche 6 und 7 in die Austragkanäle 4 über. Die Austragkanäle 4 werden beidseitig von ebenfalls ebenen Austragleitblechen 9 begrenzt, die in Richtung der ebenen Eingangsleitbleche 8 orientiert sind. Die Partikel werden so im Wesentlichen in der ursprünglichen Richtung des eintretenden, verunreinigten Luftstroms 3 in die Austragkanäle 4 befördert.

Die Luftleitbleche 6 und 7 werden jeweils durch Segmente von Mantelflächen von zwei identischen nicht dargestellten, imaginären Kreiszylindern gebildet, deren Achsen 10 beziehungsweise 11 in Figur 1 senkrecht zur Darstellungsebene zueinander parallel verlaufen. Dadurch, dass die Achse 11 in Figur 1 relativ zur Achse 10 verschoben ist, wird erreicht, dass die beiden Luftleitbleche 6 und 7 aufeinander zu laufen und so die Eingangskanäle 2 verengt werden.

Die Länge des jeweiligen Bogens der Kreiszylindersegmente, die die Luftleitbleche 6 und 7 bilden, und der Radius der Kreiszylinder werden abhängig von der Masse und /oder der Dimension der Partikel und der Strömungsgeschwindigkeit des verunreinigten Luftstroms 3 vorgegeben. Die Bogenlängen des jeweiligen Kreiszylindersegments ist durch zwei ebenfalls imaginäre, in Figur 1 dargestellte, Halbmesser 12 und 13 definiert, wobei der jeweilige Zentriwinkel 14 zwischen den Halbmessern 12 und 13 beispielhaft einen Wert zwischen 10° und 90 ° aufweist. Für den Kreiszylinderkreisradius werden abhängig von den Partikeln beispielhaft Werte zwischen 500 mm und 3000 mm vorgegeben.

Der Partikelabscheider 1 ist so angeordnet, dass der verunreinigte Luftstrom 3 unter einem maximalen Auftreffwinkel 15 von 15° in Figur 1 von unten auf die äußeren Luftleitbleche 6 der Eingangskanäle 2 auftrifft, so dass sich der verunreinigte Luftstrom 3 an den Verlauf der Luftleitbleche 6 anpasst und Turbulenzen vermieden werden.

Die inneren Luftleitbleche 7 weisen jeweils eine Vielzahl von Luftkanälen 16 auf, die aus den Eingangskanälen 2 heraus jeweils in einen Ablasskanal 17 für die gereinigte Luft 18 führen. Die Luftkanäle 16 werden durch Ausstanzungen 19 der inneren Luftleitbleche 7 gebildet, die von den Eingangskanälen 2 weg zu dem jeweiligen Ablasskanal 17 hin aufgebogen sind. Die Ausstanzungen 19 weisen, wie auch in der Detailansicht in Figur 2 dargestellt ist, im Querschnitt eine S-Form auf. Die Luftkanäle 16 verlaufen im Wesentlichen entgegen der ursprünglichen Richtung des verunreinigten Luftstroms 3. Die S- Form der Luftkanäle 16 ermöglicht einen glatten Übergang von den jeweiligen inneren Luftleitblechen 7 zum jeweiligen Ablasskanal 17, so dass in dem aus den Eingangskanälen 2 herausströmenden gereinigten Lufrstrom 18 Turbulenzen vermieden werden.

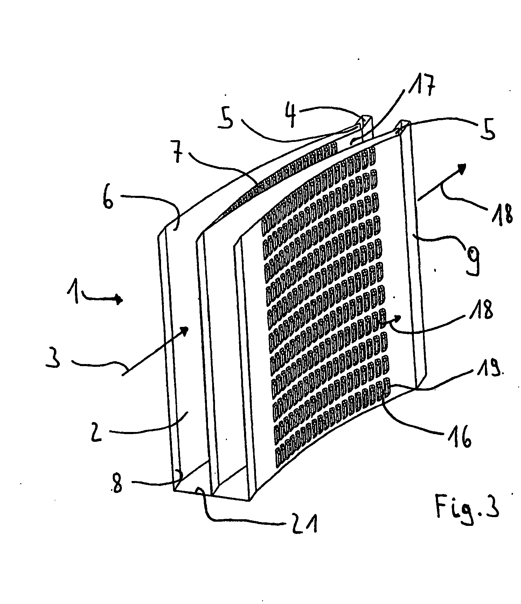

Ein erster in Figur 1 linker Ablasskanal 17 wird durch das erste in Figur 1 linke innere Luftleitblech 7 und durch das zweite in Figur 1 rechte äußere Luftleitblech 6 begrenzt. Ein zweiter in Figur 1 rechter Ablasskanal 17 wird durch das zweite in Figur 1 rechte innere Luftleitblech 7 und ein parallel zu den äußeren Luftleitblechen 6 verlaufendes Abschlußblech 20 begrenzt. Die Äblasskanäle 17 werden in Figur 1 oben an ihrem jeweiligen Ausgangsbereich durch die Ausgangsleitbleche 9 begrenzt, so dass der gereinigte Luftstrom 18 dort in die gleiche Richtung ausströmt, wie der ursprünglich verunreinigte Luftstrom 3 in die Eingangskanäle 2 einströmt. Daher kann der Partikelabscheider 1 direkt in einem nicht dargestellten linearen Strömungskanal der Zuluftanlage angeordnet werden, ohne dass eine Umlenkung der Luftströmung erforderlich ist In Figur 3 ist der in Figur 1 schematisch dargestellte Partikelabscheider 1 isometrisch dargestellt. Zum besseren Verständnis wurde jedoch auf die Darstellung des Abschlußblechs 20, der imaginären Achsen 10 und 11 und der imaginären Halbmesser 12 und 13 verzichtet. Statt dessen sind in Figur 3 unten Bodenbleche 21 dargestellt, diesenkrecht zu den Luftleitblechen 6 und 7 angeordnet sind und die Eingangskanäle 2 stirnseitig begrenzen.

Wird nun der Partikelabscheider 1 betrieben, so strömt der durch Partikel verunreinigte Luftstrom 3 mit einer vorgegebenen Strömungsgeschwindigkeit unter einem Winkel von weniger als 15° gegenüber den äußeren Luftleitblechen 6 in Figur 1 von unten in die Eingangskanäle 2 ein.

Der verunreinigte Luftstrom 3 strömt an den äußeren Luftleitblechen 6 entlang, wobei aufgrund der Zentrifugalkraft die Partikel in Figur 1 nach links zu den äußeren Luftleitblechen 6 befördert werden. Durch Reibung an den äußeren Luftleitblechen 6 wird die Strömungsgeschwindigkeit reduziert, so dass die Partikel am Ende der Eingangskanäle 2 in den Austragkanälen 4 in eine beruhigte Zone gelangen. Die abgebremsten Partikel sinken wegen der Schwerkraft entlang der Luftleitbleche 6 oder in den Austragkanälen 4 nach unten in Figur 1 und werden in an sich bekannter Weise abgesaugt.

Der gereinigte Luftstrom 18 strömt im Wesentlichen entgegen dem ursprünglichen verunreinigten Luftstrom 3 durch die Luftkanäle 16 hindurch aus den Eingangskanälen 2 in die Auslasskanäle 17, durch die hindurch er den Partikelabscheider 1 verlässt.

Statt der Mantelfläche eines Kreiszylinders kann auch eine spiralförmige, zum Austragkanal 4 zulaufende Krümmung der Luftleitbleche vorgesehen sein, so dass die Abnahme der Strömungsgeschwindigkeit und eine damit zusammenhängende Abnahme der Zentrifugalkraft durch einen kleiner werdenden Krümmungsradius kompensiert werden.

Alle Luftleitffächen können statt aus Blech auch aus einem anderen Material, beispielsweise aus Kohlefaser, bestehen.

## Patentansprüche

1. Partikelabscheider, insbesondere für eine Zuluftanlage, mit
a) wenigstens einem Eingangskanal (2) für einen mit Partikeln verunreinigten Fluidstrom (3), insbesondere einen verunreinigten Luftstrom, der durch zwei gegenüberliegend angeordnete Fluidleitbleche (6, 7) begrenzt ist, sich in Fluldstromrichtung verengt und in einen Austragkanal (4) für Partikel mündet, wobei ein äußeres Fluidleitblech (6) wenigstens in einem Bereich vor dem Austragkanal (4) von außen gesehen konvex und ein inneres Fluidleitblech (7) von außen gesehen konkav ist;
b) wenigstens einem Ablasskanal (17) für das gereinigte Fluid der an einer Seite durch das innere Fluid leitblech (7) begrenzt ist und mit dem Eingangskanal (2) über mindestens einen Fluidkanal (16) in dem inneren Fluidleitblech (7) verbunden ist;
**dadurch gekennzeichnet, dass**
c) mehrere Eingangskanäle (2) im wesentlichen parallel angeordnet sind und jedem dieser Eingangskanäle (2) ein Austragkanal (4) und ein Ablasskanal (17) zugeordnet sind;
d) mindestens ein Ablasskanal (17) an einer Seite durch das innere Fluidleitblech (7) eines ersten Eingangskanals (2) und an der gegenüberliegenden Seite durch das äußere Fluidleitblech (6) eines zweiten Eingangskanals (2) begrenzt ist.

2. Partikelabscheider nach Anspruch 1, dadurch gekenzeichnet, dass der Auftreffwinkel (15) des mit Partikeln verunreinigten Fluidstroms (3) auf den gekrümmte Bereich des äußeren Fluidleitblechs (6) kleiner als 20°, vorzugsweise 15° ist.

3. Partikelabscheider nach Anspruch 1 oder 2, **dadurch gekennzeichnet, dass** das innere Fluidleitblech (7) vom Inneren des Eingangskanals (2) weg gekrümmt ist.

4. Partikelabscheider nach einem der Ansprüche 1 bis 3, **dadurch gekennzeichnet, dass** die beiden Fluidleitbleche (6, 7) als Mantelsegmente von zwei hohlen Kreiszylindern realisiert sind, die unterschiedliche Achsen (10, 11) haben.

5. Partikelabscheider nach Anspruch 4, **dadurch gekennzeichnet, dass** die Kreiszylinder gleiche Radien haben.

6. Partikelabscheider nach einen der Ansprüche 1 bis 3, **dadurch gekennzeichnet, dass** ein Maß der Krümmung des Eingangskanals in Richtung zum Austragkanal (4) hin zunimmt.

7. Partikelabscheider nach einem der vorigen Ansprüche, **dadurch gekennzeichnet, dass** wenigstens ein Fluidkanal (16) durch das Fluidleitblech (7) hindurch führt, das gegenüber dem äußeren Fluidleitblech (6) angeordnet ist.

8. Partikelabscheider nach einem der vorigen Ansprüche, **dadurch gekennzeichnet, dass** der wenigstens eine Fluidkanal (16) im Wesentlichen eine S-Form aufweist.

9. Partikelabscheider nach einem der vorigen Ansprüche, **dadurch gekennzeichnet, dass** der wenigstens eine Fluidkanal (16) im Wesentlichen entgegen der ursprünglichen Fluidstromrichtung (3) vom Eingangskanal (2) weg führt.

10. Partikelabscheider nach einem der vorigen Ansprüche, **dadurch gekennzeichnet, dass** der Austragkanal (4) eine Rückhalteeinheit (5) für Partikel aufweist.

## Claims

1. Particle separator, in particular for an air inlet unit, comprising
a) at least one inlet channel (2) for a fluid flow (3) contaminated with particles, in particular a contaminated air flow, which is defined by two opposing fluid guide plates (6, 7), narrows in the fluid flow direction and issues into an outlet channel (4) for particles, wherein at least in a region upstream of the outlet channel (4) an outer fluid guide plate (6) is convex as seen from the outside and an inner fluid guide plate (7) is concave as seen from the outside;
b) at least one discharge channel (17) for purified fluid which is delimited on one side by the inner fluid guide plate (7) and which is connected with the inlet channel (2) via at least one fluid channel (16) in the inner fluid guide plate (7);
**characterised in that**
c) several inlet channels (2) are disposed in a substantially parallel manner and that an outlet channel (4) and a discharge channel (17) are associated with each inlet channel (2);
d) at least one discharge channel (17) is delimited on one side by the inner fluid guide plate (7) of a first inlet channel (2) and on the opposite side by the outer fluid guide plate (6) of a second inlet channel (2).

2. Particle separator according to claim 1 **characterised in that** the impingement angle (15) of the fluid flow (3) contaminated with particles is smaller than 20°, preferably 15°, on the curved region of the outer fluid guide plate (6).

3. Particle separator according to claim 1 or 2, **characterised in that** the inner fluid guide plate (7) is curved away from the inside of the inlet channel (2).

4. Particle separator according to any one of claims 1 to 3, **characterised in that** the two fluid guide plates (6,7) are formed as periphery segments of two hollow circular cylinders which have different axes (10, 11).

5. Particle separator according to claim 4, **characterised in that** the circular cylinders have identical radii.

6. Particle separator according to any one of claims 1 to 3, **characterised in that** a part of the curvature of the inlet channel increases in the direction towards the outlet channel (4).

7. Particle separator according to any one of the preceding claims, **characterised in that** the at least one fluid channel (16) leads through the fluid guide plate (7) which is disposed opposite the outer fluid guide plate (6).

8. Particle separator according to any one of the preceding claims, **characterised in that** the at least one fluid channel (16) is substantially in the shape of an 'S'.

9. Particle separator according to any one of the preceding claims, **characterised in that** the at least one fluid channel (16) leads away from the inlet channel (2) substantially in the opposite direction to the original fluid flow direction (3).

10. Particle separator according to any one of the preceding claims, **characterised in that** the outlet channel (4) comprises a containment unit (5) for particles.

## Revendications

1. Séparateur de particules, en particulier pour un système d'arrivée d'air, avec
a) au moins un canal d'entrée (2) pour un courant de fluide (3) pollué par des particules, en particulier un courant d'air pollué, qui est limité par deux tôles de guidage de fluide (6, 7) disposées l'une en face de l'autre, se rétrécit dans la direction du courant de fluide et débouche dans un canal de décharge (4) pour les particules, une tôle de guidage de fluide extérieure (6) étant convexe vue de l'extérieur au moins dans une zone qui précède le canal de décharge (4) et une tôle de guidage de fluide intérieure (7) étant concave vue de l'extérieur ;
b) au moins un canal de sortie (17) pour le fluide purifié, qui est limité d'un côté par la tôle de guidage de fluide intérieure (7) et relié au canal d'entrée (2) par au moins un canal de fluide (16) dans la tôle de guidage de fluide intérieure (7) ;
**caractérisé en ce que**
c) plusieurs canaux d'entrée (2) sont disposés essentiellement parallèlement et un canal de décharge (4) et un canal de sortie (17) sont associés à chacun de ces canaux d'entrée (2) ;
d) au moins un canal de sortie (17) est limité d'un côté par la tôle de guidage de fluide intérieure (7) d'un premier canal d'entrée (2) et du côté opposé par la tôle de guidage de fluide extérieure (6) d'un deuxième canal d'entrée (2).

2. Séparateur de particules selon la revendication 1, **caractérisé en ce que** l'angle d'incidence (15) du courant de fluide (3) pollué par des particules est inférieur à 20°, de préférence égal à 15°, dans la zone courbe de la tôle de guidage de fluide extérieure (6).

3. Séparateur de particules selon la revendication 1 ou 2, **caractérisé en ce que** la tôle de guidage de fluide intérieure (7) est incurvée dans la direction qui l'éloigne de l'intérieur du canal d'entrée (2).

4. Séparateur de particules selon une des revendications 1 à 3, **caractérisé en ce que** les deux tôles de guidage de fluide (6, 7) sont réalisées sous la forme de segments d'enveloppe de deux cylindres circulaires creux qui ont des axes (10, 11) différents.

5. Séparateur de particules selon la revendication 4, **caractérisé en ce que** les cylindres circulaires ont le même rayon.

6. Séparateur de particules selon une des revendications 1 à 3, **caractérisé en ce que** qu'une dimension de la courbure du canal d'entrée augmente en direction du canal de décharge (4).

7. Séparateur de particules selon une des revendications précédentes, **caractérisé en ce qu'**au moins un canal de fluide (16) passe à travers la tôle de guidage de fluide (7) qui est disposée en face de la tôle de guidage de fluide extérieure (6).

8. Séparateur de particules selon une des revendications précédentes, **caractérisé en ce que** ledit au moins un canal de fluide (16) présente essentiellement une forme en S.

9. Séparateur de particules selon une des revendications précédentes, **caractérisé en ce que** ledit au moins un canal de fluide (16) conduit hors du canal d'entrée (2) essentiellement à l'encontre de la direction initiale du courant de fluide (3).

10. Séparateur de particules selon une des revendications précédentes, **caractérisé en ce que** le canal de décharge (4) présente une unité de retenue (5) pour les particules.
